# EUROPEAN PATENT SPECIFICATION

(11) **EP 3 556 655 B1**
(45) Date of publication and mention of the grant of the patent: **18.11.2020**
(21) Application number: 18400010.7
(22) Date of filing: 17.04.2018
(51) Int. Cl.: B64D 9/00, B64D 1/22

(54) **AN APPARATUS FOR CARRYING CARGO WITH AN AIRCRAFT**
VORRICHTUNG ZUR FRACHTBEFÖRDERUNG MIT EINEM FLUGGERÄT
APPAREIL DE TRANSPORT DE MARCHANDISES DANS UN AÉRONEF

(43) Date of publication of application: 23.10.2019
(73) Proprietor: AIRBUS HELICOPTERS DEUTSCHLAND GmbH, 86609 Donauwörth (DE)
(72) Inventor: Von-Wilmowsky, Kaspar, 86609 Donauwörth (DE); Pfaller, Rupert, 85521 Riemerling (DE); Kellner, Thomas, 94327 Bogen (DE)
(74) Representative: GPI & Associés

(56) References cited:
- EP-A1- 3 053 823
- EP-A2- 2 481 671
- US-A- 5 264 666
- US-A- 5 850 991
- US-A1- 2005 127 695
- US-A1- 2016 236 779

## Description

The invention is related to an aircraft with a fuselage and a floor structure that is arranged inside said fuselage, said floor structure accommodating an apparatus for carrying cargo.

Aircrafts and, more particularly, rotorcrafts such as helicopters or hybrid aircrafts, such as e. g. tilt-rotors, compound aircrafts, are commonly used to perform aerial transportation and delivery tasks, including passenger transport, disaster relief, or carrying all kind of external loads. By way of example, helicopters are used to transport and deliver loads to mountainous regions in general and, more specifically, to mountainous regions where no roads exist or where roads cannot be used for transportation and delivery, e. g. due to extreme weather conditions in winter and so on.

Furthermore, helicopters are used for transportation and delivery of loads in the construction sector, where the loads may represent any kind of material. Moreover, helicopters can be used in firefighting for transportation of firefighting buckets. In addition, helicopters are also very useful in wood logging for transporting harvested wood. In all of these cases, the helicopters can be required to transport comparatively heavy external loads which can, depending on an underlying type of helicopter, weigh up to several tons.

In order to enable a given helicopter for transportation of an external load, the helicopter can be equipped with a cargo hook arrangement to which an external load mass rope for connection to the external load can be attached. Thus, a given external load can be suspended from the helicopter by means of the external load mass rope, which is particularly useful for bulky loads which do not fit into the cabin of the helicopter.

Frequently, such a cargo hook arrangement is attached to the helicopter's landing skid. By way of example, a helicopter having such a cargo hook arrangement attached to its landing skid is described in document WO 2012/037595 A1. However, attaching the cargo hook arrangement respectively a given bracketing or structural support thereof externally to the helicopter's landing skid is aerodynamically disadvantageous, as an undesired additional drag is produced in operation, as well as unfavorable flight mechanics in the worst case.

Alternatively, such a cargo hook arrangement is installed below the fuselage of the helicopter, i. e. at an underside of the fuselage in an area of a subfloor region of the helicopter. This subfloor region is defined between a floor structure of the helicopter that is arranged inside the helicopter and a fuselage underside of the fuselage and can generally be used to accommodate one or more auxiliary compartments, such as fuel tanks of the helicopter. By way of example, the document US 5,451,015 describes a helicopter with a fuel tank arrangement that is accommodated in its subfloor region.

A cargo hook arrangement that is installed below the fuselage of the helicopter, i. e. at an underside of the fuselage in an area of a subfloor region, is typically attached to the fuselage respectively its mainframe, since this is the primary structure that is designed to withstand all loads which may occur in various load cases during the lifetime of the helicopter. A corresponding helicopter having such a cargo hook arrangement attached to its fuselage is for example described in the documents EP 2 168 871 A1 (US2010140412A1), US 8,534,608 B1 and US 2013/0054054 A1. In all of these helicopters, the cargo hook arrangement introduces all loads such as sling loads, crash loads or any other applied loads into the mainframe of the helicopter via the helicopter's subfloor frame structure.

However, such externally mounted cargo hook arrangements decrease the overall aerodynamic performances of the helicopter. More specifically, due to a given bracketing or structural support thereof, which is externally attached to the fuselage, the overall aerodynamic performances of the helicopter are decreased, as an undesired additional drag will be produced in operation, as well as unfavorable flight mechanics in the worst case.

In order to avoid such an undesired additional drag and unfavorable flight mechanics, the cargo hook arrangement can be arranged inside an equipment bay, which is integrated into the subfloor region of the helicopter instead of the one or more auxiliary compartments described above. The document US 5,850,991 describes such a helicopter with a cargo hook arrangement, which is deployable from an associated equipment bay in operation for carrying external loads, and stowable inside the equipment bay when not in use. The associated equipment bay is installed in the subfloor region of the helicopter such that loads introduced from the cargo hook arrangement are transferred to an adjacent subfloor frame structure.

The document US 4,893,767 describes another helicopter with a cargo hook arrangement. The cargo hook arrangement described in this document is mainly installed inside the helicopter. Associated with this cargo hook arrangement is a cargo hook that is attached to a cable. This cable can be deployed out of the helicopter through a cable and equipment guide that is integrated in the form of a funnel respectively through a hole into the helicopter's fuselage.

The AgustaWestland AW101 Merlin helicopter (formerly AgustaWestland EH101) has a cargo hook and load cell under the fuselage that is secured between two I-beams by a yoke and joint bolt assembly. This assembly allows for lateral and longitudinal movement of the cargo hook and load through two perpendicular bolt connections. The yoke is able to swing around a lateral axis. However, the cargo hook protrudes relatively widely from the airframe structure resulting in aerodynamic disadvantages.

Furthermore, helicopters with externally mounted cargo hook arrangements will have disadvantages in crash situations, where the cargo hook arrangements hit the ground first. In such crash load cases, the crash loads will be transferred to the fuselage mainframe and the cargo hook arrangement will protrude into the helicopter's subfloor region, which commonly comprises fuel tanks, if a given critical area is not protected by an additional structure.

Thus, in summary, the externally mounted cargo hook arrangements and, more generally any externally attached equipment, does not only affect the crashworthiness of the helicopters, but consequently lead to higher certification efforts. Additionally, such externally mounted cargo hook arrangements do not provide for favorable aerodynamic characteristics since they produce additional drag in operation, leading to increased fuel consumption, reduced velocity or higher required power to reach the intended velocities.

In contrast thereto, cargo hook arrangements that are mounted in associated equipment bays in the helicopter's subfloor region provide for ameliorated aerodynamics and are favorable during crash situations, since the subfloor mainframe will hit the ground first and absorb the crash loads.

The document EP2481671 describes a fixation device outside and below a bearing structure of an aircraft. The bearing structure is a fuselage of the aircraft, a loading bar or even a wing. The fixation device has a sustaining beam. The sustaining beam typically of lattice with a rectangular cross section a polygonal profile extends from a first end towards a second end. A first mechanical link of the sustaining beam is provided with a first fixation organ that cooperates with a first anchorage organ to the bearing structure and the first end. A second fixation organ cooperates with a second anchorage organ and the second end. The fixation device includes an automatic refolding means for moving the fixation device against the structure when no external load is attached.

The document US2005127695 describes hooks for lifting cargo e.g. by cranes used in general construction, fishing, logging, cargo handling, foundry work and other industries. This document offers to release or unlock the hook remotely, without requiring personnel, after the cargo is lifted and transported. The hook is selectively secured or locked in the closed position with a lock mechanism or member, such as a lock pin. This lock pin is selectively controlled to extend and engage a recess formed in the hook, thereby preventing the hook from pivoting about a pivot pin.

The document US2016236779 describes a belly-mounted load beam for a helicopter. The load beam is mounted on a belly of the helicopter. A tether is connected to a load to be airlifted. First and second arms are each pivotably connected to opposite ends of the beam. A hook is pivotable and is provided with a conventional locking mechanism.

The document US5264666 describes a cargo hook for releasably transporting loads under a helicopter. The hook is incorporated in an elongated body having opposite end trunnions, which are supported in fore and aft bearings mounted on the framework of the helicopter.

It is, therefore, an objective to provide a new apparatus for carrying cargo with an aircraft. In particular, the apparatus for carrying cargo should be mountable in a subfloor region of the aircraft and only protrude minimally from the bottom shell of the aircraft to ensure ground clearance, especially on open ground. The apparatus should have a very limited impact on the aerodynamics of the aircraft when no cargo is hooked.

Furthermore, at least some portions of the apparatus for carrying cargo should be detachable to reduce weight during operation without cargo, while the assembly and disassembly of the apparatus should be performable in a short period of time. Moreover, the apparatus should transfer all loads safely into the aircraft structure, and the compartment in which the apparatus is installed should be as small as possible to leave as much space as possible for neighboring subfloor structures in which other portions of the aircraft's equipment such as fuel tanks or auxiliary equipment may be installed.

This objective is solved by an apparatus for carrying cargo that is mountable inside a subfloor region of an aircraft and comprises the features of claim 1. More specifically, an apparatus for carrying cargo that is mountable in a subfloor region of an aircraft may include a first bracket that is rigidly attached to a first structural component of the aircraft, a second bracket that is rigidly attached to a second structural component of the aircraft, a cargo hook, and a cargo sling beam that has a longitudinal axis in a longitudinal direction and first and second ends in the longitudinal direction. The cargo sling beam has a circular shape at the first and second ends and a constriction region at a predetermined location between the first and second ends that is narrower than the first and second ends. The cargo sling beam further has a suspension device in the constriction region that receives the cargo hook, and first and second attachments that connect the first and second ends removably and at least partially pivotably around the longitudinal axis with the first and second brackets, respectively.

The cargo sling beam may be mounted between two longitudinal frame components, which are sometimes also referred to as "longerons", or between two transversal frame components of an aircraft fuselage. Thus, the cargo sling beam may bridge a relatively wide distance without the need of additional supports.

If desired, the cargo sling beam may be mounted so that it can rotate around a longitudinal axis. For example, the cargo sling beam may be swivel-mounted about an axis. If desired, the cargo sling beam may incorporate a bearing in the middle to receive the cargo hook. The attachment bolt that fixes the cargo hook to the cargo sling beam may be placed at the middle of the height defined by the distance between the bottom shell and the interior floor. Thereby, the cargo hook may protrude as little as possible from the fuselage.

In some embodiments, the cargo sling beam may be hollow. A hollow cargo sling beam may enable the cargo hook to be positioned towards the fuselage interior, while the cargo hook forces may be transferred through the cargo sling beam due to its high geometrical moment of inertia. At the location at which the cargo sling beam receives the cargo hook, the cargo sling beam may have a constriction region, so that it is still very bending resistant in force direction.

In some embodiments, the cargo sling beam may have a tubular shape at both ends where it is attached to the longerons. The tubular section of the cargo sling beam may be used for both the bending beam section and the bearing surface, thereby requiring fewer parts.

If desired, the tubular shape may stretch almost over the entire height between the bottom shell and the interior floor. Thereby, loads in direction of the cargo sling beam may be transferred into the bottom shell and the interior floor, while forces that are perpendicular to the cargo sling beam in vertical and longitudinal direction are transferred into the longerons' webs.

The cargo sling beam may be mounted with one bracket per longeron when the cargo sling beam is mounted between two longerons or with one bracket per transversal frame component when the cargo sling beam is mounted between two transversal frame components. According to one aspect, bearing sleeves may attach the cargo sling beam to the brackets enabling the cargo sling beam to be mounted and demounted within a short time period. The axis of rotation of the cargo sling beam needs not to intersect with the cargo hook attachment bolt axis but may do so.

No transition may occur within the cargo sling beam from a large section profile that results in a light design for load transfer to a small section profile that enables a conventional bearing. As a result, the cargo sling beam may be made using at least partially fiber reinforced plastics. Thus, the apparatus for carrying cargo may be light weight and may have little or no risks of corrosion, even when exposed to sea water.

A small bearing pressure may enable the use of polymer bearing materials. For example, the cargo sling beam may incorporate two bearing surfaces at each end that include a polytetrafluoroethylene (PTFE) foil lining. Thus, no lubricants may be required at the bearing surfaces.

The apparatus for carrying cargo may be easily mountable in and demountable from a cargo hook compartment located in a subfloor region of an aircraft, without the use of auxiliary supports. Thus, the cargo hook compartment may be relatively small, and mounting of the cargo hook may be possible without or with very little overlap over the bottom shell contour.

In some embodiments, the cargo sling beam may be mountable and demountable from the inside of the aircraft through a cargo hook compartment door situated in the floor structure of the aircraft. Thereby, the cargo sling beam may be put in place from the top through the cargo hook compartment door and secured to brackets using securing devices such as attachment rings and/or bearing shells. In some embodiments, the securing devices may not carry a load when the cargo sling beam is loaded.

A cargo sling beam with a tubular shape at the ends and a constriction region between the ends that is narrower than the ends may be easily producible using composite materials such as fiber reinforced plastics that enable ideal load transitions and therefore a lightweight and reliable design having double bearing stress with large edge distance in combination with potential pivot bearing for the second gimbal axis.

According to one aspect, the cargo sling beam is at least partially made from a fiber reinforced composite material.

According to one aspect, the cargo sling beam includes a rotation limitation device that limits rotation of the cargo sling beam around the longitudinal axis to a predetermined angle.

According to one aspect, the cargo sling beam includes a locking device that locks the cargo sling beam in a predetermined position rotated around the longitudinal axis.

According to one aspect, the cargo sling beam includes at least one resistance strain gauge that measures a deformation of the cargo sling beam when a load is attached to the cargo hook.

According to one aspect, the first and second structural components are connected to at least one of a floor structure of the aircraft or a bottom shell of the aircraft.

According to one aspect, the first and second structural components are selected from the group consisting of longerons, stringers, stiffeners, formers, ribs, spars, and frames.

According to one aspect, the cargo hook includes an attach point that is fork-shaped and encloses the cargo sling beam in the constriction region.

According to one aspect, the cargo hook includes an attach point that is ring-shaped, wherein the cargo sling beam has an opening in the constriction region that encloses the attach point.

According to the invention, the suspension device includes a bolt that connects the cargo hook with the cargo sling beam using the attach point, and a bolt bearing between the bolt and the attach point that has a section thinning on at least one side to ensure a turnout of the cargo hook during a crash of the aircraft.

According to one aspect, the first attachment includes a bearing sleeve and a radial bearing. The bearing sleeve is movable on the cargo sling beam in longitudinal direction at the first end for connecting the cargo sling beam with the first bracket, and the radial bearing between the bearing sleeve and the first end of the cargo sling beam.

According to one aspect, the apparatus may include at least three fasteners for removably connecting the bearing sleeve with the first bracket.

According to one aspect, the apparatus may include first and second bearing shells that together enclose the cargo sling beam at the first end, and first and second fasteners for removably connecting the first bearing shell with the second bearing shell at the first end of the cargo sling beam, and wherein the first and second fasteners break during a crash of the aircraft.

According to one aspect, the first bracket comprises one of the first or second bearing shells to form a bracket with integrated bearing shell.

According to one aspect, the apparatus may include a resistance strain gauge that measures a deformation of the first bracket when a load is attached to the cargo hook.

Embodiments are outlined by way of example in the following description with reference to the attached drawings. In these attached drawings, identical or identically functioning components and elements are labeled with identical reference numbers and characters and are, consequently, only described once in the following description.
- Figure 1 is a diagram of an illustrative side view of an aircraft with a subfloor region in accordance with some embodiments,
- Figure 2 is a diagram of an illustrative subfloor region of an aircraft having an equipment bay that may receive an apparatus for carrying cargo in accordance with some embodiments,
- Figure 3 is a diagram showing a view from the side of an illustrative apparatus for carrying cargo that is removably installed in the subfloor region of an aircraft in accordance with some embodiments,
- Figure 4 is a diagram showing a view from above of an illustrative apparatus for carrying cargo that is removably installed in the subfloor region of an aircraft and has a cargo sling beam with a circular shape at both ends and a constriction region between the two ends in accordance with some embodiments,
- Figure 5 is a diagram of an illustrative apparatus for carrying cargo having an arc-shaped cargo sling beam in accordance with some embodiments,
- Figure 6A is a diagram of an illustrative apparatus for carrying cargo having a cargo sling beam with a circular shape at both ends and a recess between the two ends and a cargo hook attach point with a bolt connection that joins the recess of the cargo sling beam in accordance with some embodiments,
- Figure 6B is a diagram of an illustrative apparatus for carrying cargo having a cargo sling beam with a circular shape at both ends, a recess between the two ends, and an opening through which a cargo hook may be attached to the cargo sling beam in accordance with some embodiments,
- Figure 6C is a diagram of a cross-section through an illustrative apparatus for carrying cargo having a cargo sling beam with a circular shape at both ends and a recess between the two ends and a cargo hook attached to the cargo sling beam at the recess in accordance with some embodiments,
- Figure 7 is a diagram of an illustrative locking device that locks an attachment at a cargo sling beam to ensure that the cargo sling beam remains mounted to a bracket in accordance with some embodiments,
- Figure 8 is a diagram of an illustrative attachment ring that is locked at a bracket to hold a cargo sling beam in place in accordance with some embodiments,
- Figure 9A is a diagram of a cross-section showing an illustrative attachment that is attached to a bracket to hold a cargo sling beam in place in accordance with some embodiments,
- Figure 9B is a diagram of a cross-section showing an illustrative attachment that is attached to a bracket with a nut and a bolt to hold a cargo sling beam in place in accordance with some embodiments,
- Figure 9C is a diagram of a cross-section showing an illustrative attachment that is attached to a bracket with a bolt to hold a cargo sling beam in place in accordance with some embodiments,
- Figure 10A is a diagram of an illustrative cargo sling beam with a bolt bearing between a bolt and an attach point of a cargo hook, whereby the bolt bearing has a section thinning on at least one side to ensure a turnout of the cargo hook during a crash in accordance with some embodiments,
- Figure 10B is a diagram of a cross-section showing an illustrative cargo sling beam with a bolt bearing between a bolt and an attach point of a cargo hook, whereby the bolt bearing has a section thinning on at least one side to ensure a turnout of the cargo hook during a crash in accordance with some embodiments,
- Figure 11 is a diagram of a cross-section showing an illustrative cargo sling beam in a compartment which has a bottom shell cone that closes the compartment with a seal in accordance with some embodiments,
- Figure 12 is a diagram of a cross-section showing an illustrative cargo sling beam that is fixed to a bracket with two bearing shells in accordance with some embodiments,
- Figure 13A is a diagram of an illustrative cargo sling beam that is fixed to a bracket in which the lower bearing shell is integrated into the bracket in accordance with some embodiments,
- Figure 13B is a diagram of an illustrative cargo sling beam that is fixed to a bracket in which the upper bearing shell is integrated into the bracket in accordance with some embodiments, and
- Figure 14 is a diagram of an illustrative rotation limitation device in accordance with some embodiments.

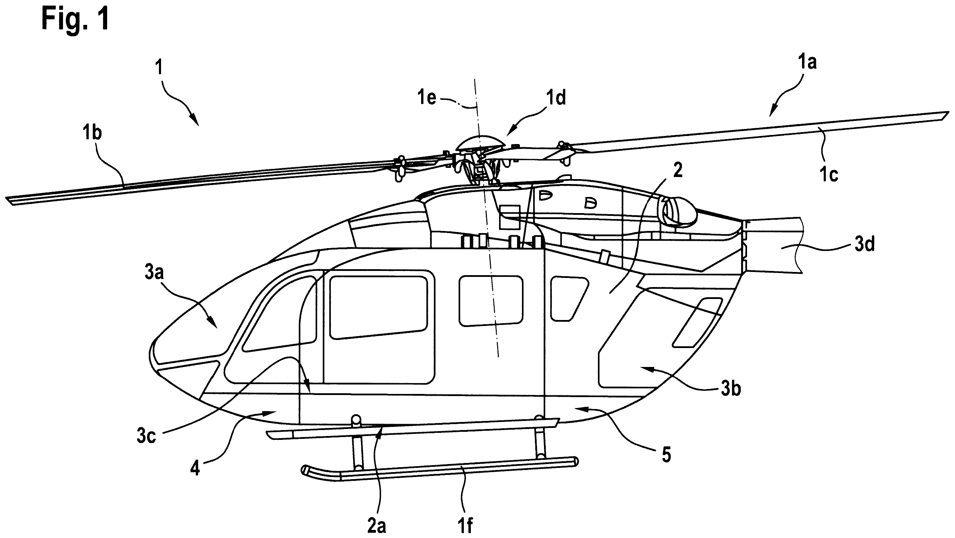

Figure 1 shows an aircraft 1, which comprises a fuselage 2 with a subfloor region 4. The aircraft 1 is exemplarily embodied as a rotary-wing aircraft and, more particularly, as a helicopter. Therefore, the aircraft 1 is also referred to hereinafter as the "helicopter 1" for simplicity and clarity. It should, however, be noted that the various embodiments presented hereinafter are not limited to helicopters and can likewise be applied to other aircrafts having a fuselage with a subfloor region.

The helicopter 1 may include at least one multi-blade main rotor 1a for providing lift and forward or backward thrust during operation. The at least one multi-blade main rotor 1a illustratively comprises a plurality of rotor blades 1b and 1c. The latter are mounted at an associated rotor head 1d to a rotor shaft, which rotates in operation of the helicopter 1 around an associated rotor axis 1e.

The fuselage 2 may comprise a fuselage underside 2a that is illustratively connected to a landing gear 1f. The latter is exemplarily embodied as a skid-type landing gear.

Fuselage 2 may define a cockpit 3a and a cargo compartment 3b of the helicopter 1. If desired, helicopter 1 may comprise one or more counter-torque devices configured to provide counter-torque during operation, i. e. to counter the torque created by rotation of the at least one multi-blade main rotor 1a for purposes of balancing the helicopter 1 in terms of yaw. The at least one counter-torque device can be provided at a tail boom 3d, which is not shown for simplicity and clarity of the drawings. If desired, tail boom 3d may further be provided e. g. with a horizontal stabilizer, a bumper, a tail wing and/or a fin.

Fuselage 2 may be provided with a floor structure 3c that is arranged inside fuselage 2. The floor structure 3c and the fuselage 2 may define the subfloor region 4, which is illustratively arranged between the floor structure 3c and the fuselage underside 2a of the fuselage 2. The fuselage underside 2a is sometimes also referred to as "bottom shell". According to one aspect, the subfloor region 4 accommodates a subfloor arrangement 5.

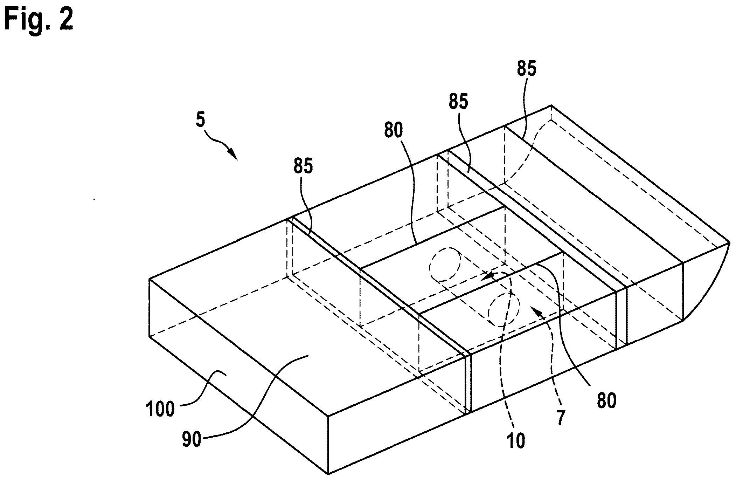

Figure 2 shows an illustrative subfloor arrangement 5 between floor structure 90 and bottom shell 100. Longitudinal frame components 80 and transversal frame components 85 may divide subfloor arrangement 5 into compartments.

In some embodiments, one or more compartments of subfloor arrangement 5 may be implemented as fuel tanks of a fuel tank arrangement.

According to one aspect, the compartments may include one or more equipment bays 7, each being at least adapted for accommodating at least one auxiliary equipment. If desired, equipment bay 7 may be positioned in the region of the rotor axis 1e of Figure 1, for example congruent therewith, in order to fulfill aeromechanical requirements. The fuel tanks may be arranged around cargo hook compartment 7 within subfloor region 4, if desired.

By way of example, equipment bay 7 defines a cargo hook compartment, wherein a cargo hook arrangement with cargo sling beam 10 defines the auxiliary equipment. Accordingly, equipment bay 7 is also referred to as "cargo hook compartment 7" and the auxiliary equipment as "cargo hook arrangement" or "apparatus for carrying cargo" hereinafter.

The apparatus for carrying cargo may include two brackets, cargo sling beam 10, and a cargo hook. The brackets may be rigidly attached to longerons 80, and cargo sling beam 10 may be removably connected at both ends and at least partially pivotably with the two brackets.

Shown and described is a design, which applies the cargo sling beam 10 between two longerons 80. Alternatively, a design having the cargo sling beam 10 mounted between two transversal frame components 85 is also possible, revealing the same design but being turned about the vertical axis by 90°.

If desired, the apparatus for carrying cargo may be mountable in cargo hook compartment 7 from above (e.g., through a cargo hook compartment door located in floor structure 90) and/or from below (e.g., through an external access in the bottom shell).

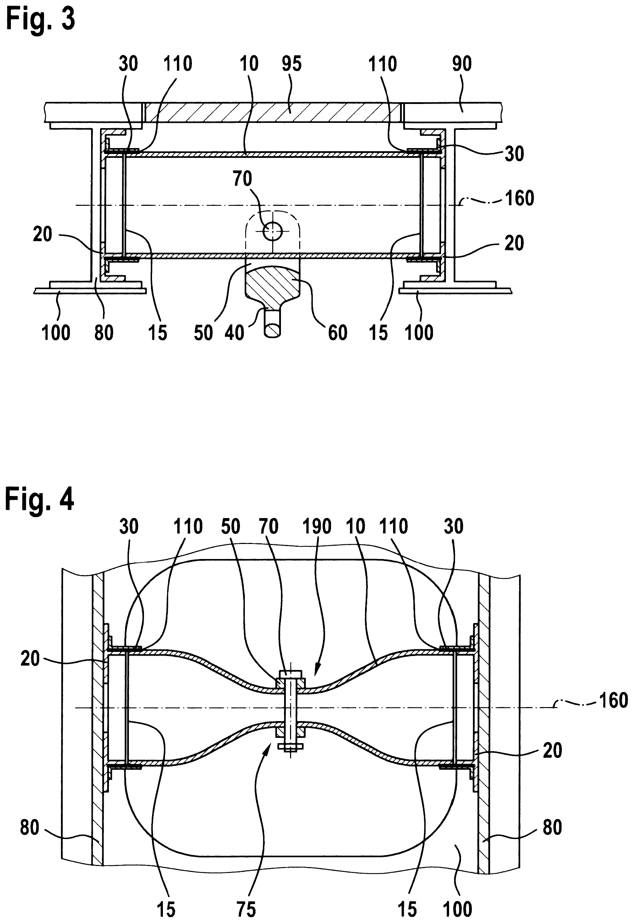

Figure 3 is a diagram of an illustrative apparatus for carrying cargo that is removably installed in the subfloor region of an aircraft between floor structure 90 and bottom shell 100 in accordance with some embodiments. As shown, the apparatus for carrying cargo is mounted between two longerons 80, and longerons 80 are connected to floor structure 90 and bottom shell 100. Thus, forces that are vertical to longitudinal axis 160 may be mainly transferred through longerons 80. If desired, the apparatus for carrying cargo may be mounted between two transversal frame components such as transversal frame components 85 of Figure 2.

The apparatus for carrying cargo may include cargo sling beam 10, brackets 20, attachment rings 30, and cargo hook 40. Cargo hook 40 may include a load beam with or without a keeper, a cargo hook attach point 50, and load cell 60, if desired. The load beam may have the form of a hook. In some embodiments, the load beam may have the form of an eye to which a hook, a rope, or any other load may be attached.

Cargo hook 40 may be attached to cargo sling beam 10 using cargo hook attach point 50. Cargo sling beam 10 may include a suspension device, which is illustratively shown as suspension device 75 of Figures 4 and 5A, 5B, 5C, 6, 10A, 10B, and 11. The suspension device may receive cargo hook 40. If desired, the suspension device may be implemented as a pole, a hanger, a hook with or without a keeper, a bolt with or without a nut, a pin, or a rivet, or any other device that enables the attachment of attach point 50 of cargo hook 40 to cargo sling beam 10.

Cargo hook attach point 50 may be fork-shaped, ring-shaped, clamp-shaped, hook-shaped, or have any other shape that, together with the suspension device, is appropriate for attaching cargo hook 40 to cargo sling beam 10. If desired, the suspension device may include a bearing that enables a rotational movement of attach point 50 around an axis that is defined by the suspension device. Such a bearing in connection with a pole or a bolt is sometimes also referred to as a "swivel bolt", and bolt 70 of the suspension device together with the bearing as cargo hook swivel bolt 70.

As an example, the suspension device may include cargo hook swivel bolt 70 (i.e., a bolt and a bolt bearing) that connects cargo hook 40 with cargo sling beam 10 using cargo hook attach point 50. If desired, the bolt bearing may have a section thinning to ensure a turnout of cargo hook 40 during a crash of the aircraft.

Brackets 20 may be rigidly attached to longerons 80. Cargo sling beam 10 may define longitudinal axis 160 and have a circular shape at the cargo sling beam ends 15. As shown, cargo sling beam 10 may have the shape of a disc that completely closes cargo sling beam 10 at ends 15. If desired, cargo sling beam 10 may have a tubular shape at ends 15 or a tubular shape with flanges at ends 15. The shape of ends 15 of cargo sling beam 10 may be matched by brackets 20. In other words, brackets 20 may have the shape of a disc where cargo sling beam 10 is mounted against brackets 20 if ends 15 of cargo sling beam 10 have the shape of a disc.

Attachments 30 may connect the ends 15 of cargo sling beam 10 removably and at least partially pivotably around longitudinal axis 160 with brackets 20. In other words, attachments 30 may enable the mounting and demounting of cargo sling beam 10 at brackets 20 and a rotational movement of cargo sling beam 10 around longitudinal axis 160 that may be limited to a predetermined angle.

Attachments 30, which are sometimes also referred to as "attachment rings", may form a ring. For example, a cross section of attachment 30 may have the shape of a rectangle, a rounded rectangle, a circle, an ellipse, an oval shape, etc. If desired, attachments 30 may have a flange. For example, the cross section of attachment 30 may have an L-shape with or without rounded corners, etc.

Attachments 30 may include one or more components. For example, attachments 30 may include a bearing sleeve at each end 15 of cargo sling beam 10. A bearing sleeve may include a ring that encloses cargo sling beam 10 at end 15. In some scenarios, a bearing sleeve may include two or more bearing shells that together enclose cargo sling beam 10 at each end 15. In these scenarios, two or more fasteners may removably connect the two or more bearing shells for forming a bearing sleeve. The two or more fasteners may be any type of fastener that may removably connect the two or more bearing shells such as a bolt with or without a nut, a pin, or a screw, just to name a few.

Consider the scenario in which two bearing shells together enclose cargo sling beam 10 at an end 15. In this scenario, two fasteners may removably connect the two bearing shells with each other so that the connected bearing shells form a bearing sleeve. If desired, one or both of the two fasteners may break during a crash of the aircraft.

Attachments 30 may be movable on cargo sling beam 10 in longitudinal direction at the respective end 15 for connecting cargo sling beam 10 with the respective bracket 20. If desired, the apparatus for carrying cargo may include radial bearing 110 between the respective bearing sleeve and the respective end 15 of the cargo sling beam 10.

If desired, radial bearings 110 may be attached to attachments 30. For example, radial bearing 10 may be glued or laminated to attachments 30. Radial bearing 110 may include a plastic liner or any other lining (e.g., a polytetrafluoroethylene (PTFE) foil lining) that forms a bearing and enables a smooth movement of attachments 30 on cargo sling beam 10 and/or brackets 20 and a smooth pivoting movement of cargo sling beam 10 around longitudinal axis 160.

In some embodiments, attachments 30 may be moved completely over cargo sling beam 10 when mounting cargo sling beam 10 to brackets 20 or when demounting cargo sling beam 10 from brackets 20. When cargo sling beam 10 is aligned with brackets 20, attachments 30 may be slid in direction of brackets 20 to removably connect cargo sling beam 10 with brackets 20. If desired, one or more fasteners may fasten attachments 30 with brackets 20.

When demounting cargo sling beam 10 from brackets 20, the one or more fasteners that fasten attachment 30 with brackets 20 may be removed, and attachments 30 may be slid from brackets 20 to cargo sling beam 10. Cargo sling beam 10 may then be removed.

Loads that are attached to cargo hook 40 may apply forces to cargo sling beam 10. Forces in direction of longitudinal axis 160 may be mainly transferred through brackets 20 into floor structure 90 and bottom shell 100. In some embodiments, ends 15 and surrounding attachments 30 with bearings 110 may have a diameter that corresponds to the height of longerons 80. Thereby, a transfer of high forces through the web of longerons 80 may be avoided, when forces in direction of longitudinal axis 160 are applied to cargo sling beam 10.

If desired, components of the apparatus for carrying cargo may be made using one or more composite materials. For example, cargo sling beam 10, brackets 20, attachments 30, cargo hook 40, or cargo hook swivel bolt 70 may be made using one or more composite materials. In some embodiments, no components of the apparatus for carrying cargo are made using a composite material. In other embodiments, a subset of the components of the apparatus for carrying cargo are made using one or more composite materials. In yet other embodiments, every component of the apparatus for carrying cargo is made using one or more composite materials. A component of the apparatus for carrying cargo that is made using one or more composite materials may or may not include other materials that are not composite materials.

Composite materials may form skins and cores between skins. Each composite material may include several constituent materials. For example, composite materials may form a skin using a matrix material, which is sometimes also referred to as a matrix phase or a background material, and a transforming material, which is sometimes also referred to as a reinforcement or a reinforcing phase. Examples for reinforcements include fibers and fabrics such as glass fibers, carbon fibers, aramid fibers, basalt fibers, flax, textiles, ceramic fibers, as well as carbon nanotubes, or any other reinforcement material that is suitable for forming a skin together with a matrix material. Examples for matrix materials include resins, polymers, ceramics, etc., or any other matrix material that is suitable for forming a skin together with a transforming material. Composite materials may form cores using any suitable constituent material for forming cores such as polyurethane (PU) foam, polyvinyl chloride (PVC) foam, or other foams, honeycomb cores, woods, just to name a few.

As shown, cargo sling beam 10 may be mounted either from below bottom shell 100 (e.g., through an opening in the bottom shell) or from above floor structure 90 (e.g., through cargo hook compartment door 95). If desired, cargo sling beam 10 may only be installed from above or from below.

Figure 4 is a diagram of an illustrative apparatus for carrying cargo that is removably installed in the subfloor region of an aircraft shown from above (e.g., shown through cargo hook compartment door 95 of Figure 3) in accordance with some embodiments. The apparatus for carrying cargo may include cargo sling beam 10, brackets 20, attachment rings 30, and cargo hook 40.

As shown, the apparatus for carrying cargo is mounted between two longerons 80. If desired, the apparatus for carrying cargo may be mounted between two transversal frame components such as transversal frame components 85 of Figure 2. If desired, cargo hook 40 may be turned by a predetermined angle compared to longitudinal axis 160 to ensure that the opening of cargo hook 40 is oriented in a predetermined direction. As an example, in the scenario in which the apparatus for carrying cargo is mounted between two transversal frame components of an aircraft such as aircraft 1 of Figure 1, cargo hook 40 may be attached to cargo sling beam 10 such that the opening of cargo hook 40 is oriented towards the front of the aircraft. Without loss of generality and simply in order not to unnecessarily obscure the present embodiments, the apparatus for carrying cargo is assumed to be mounted between two longerons 80 hereinafter.

Attachments 30 may be movable in direction of longitudinal axis 160. If desired, attachments 30 may include radial bearing 110 such as a plastic liner or any other lining (e.g., a polytetrafluoroethylene (PTFE) foil lining) that forms a bearing and enables a smooth movement of attachments 30 on cargo sling beam 10 and/or brackets 20 and a smooth pivoting movement of cargo sling beam 10 around longitudinal axis 160.

In some embodiments, attachments 30 may be moved completely over cargo sling beam 10 when mounting or demounting cargo sling beam 10 from brackets 20. When cargo sling beam 10 is aligned with brackets 20, attachments 30 may be slid in direction of brackets 20 to removably connect cargo sling beam 10 with brackets 20.

As shown, cargo sling beam 10 may have a circular shape at both ends 15 and a constriction region 190 between the two ends 15. Suspension device 75 in constriction region 190 may receive attach point 50 of cargo hook 40. If desired, cargo hook attach point 50 may be fork-shaped to enclose cargo hook beam 10 at constriction region 190.

Cargo hook 40 may be attached to cargo sling beam 10 at cargo hook attach point 50 using any appropriate suspension device 75 such as a bolt with or without a nut, a pin, or a rivet, just to name a few. As shown, cargo hook 40 may be attached with a fork-shaped cargo hook attach point 50 to cargo sling beam 10 using cargo hook swivel bolt 70 as suspension device 75.

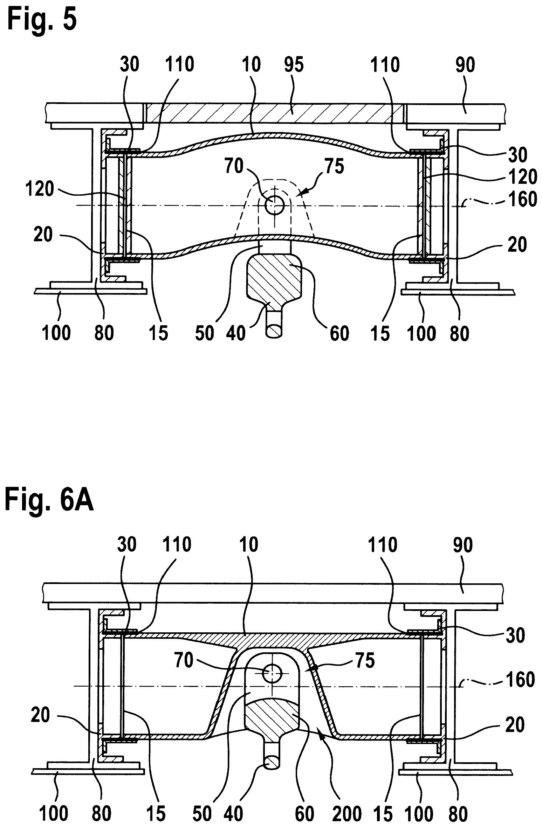

Figure 3 shows cargo sling beam 10 as being essentially straight when shown from the front or the back (i.e., from a perspective that is parallel to the floor structure such as floor structure 90 of Figure 3). If desired, cargo sling beam 10 may have any shape when shown from the front or the back. For example, cargo sling beam 10 may be arc-shaped or wave-shaped. Figure 5 is a diagram of an illustrative apparatus for carrying cargo having an arc-shaped cargo sling beam in accordance with some embodiments.

Cargo sling beam 10 may have a circular shape at ends 10. As shown, cargo sling beam 10 may have the shape of a disc that completely closes cargo sling beam 10 at ends 15. If desired, cargo sling beam 10 may have a tubular shape at ends 15 or a tubular shape with flanges at ends 15. The shape of ends 15 of cargo sling beam 10 may be matched by brackets 20. In other words, brackets 20 may have the shape of a disc where cargo sling beam 10 is mounted against brackets 20 if ends 15 of cargo sling beam 10 have the shape of a disc.

If desired, axial bearings 120 may be attached to the disc at ends 15 and/or to brackets 20 to enable a smooth pivoting movement of cargo sling beam 10 around longitudinal axis 160.

As shown, cargo sling beam 10 may be straight and have a circular shape at the cargo sling beam ends 15, for example to enable the move of attachments 30 completely over cargo sling beam 10 when mounting cargo sling beam 10 to brackets 20 or when demounting cargo sling beam 10 from brackets 20. Cargo sling beam 10 may be arc-shaped in a section between cargo sling beam ends 15.

Cargo hook 40 may be attached to arc-shaped cargo sling beam 10 at suspension device 75 using cargo hook attach point 50. In some embodiments, cargo hook 40 may be attached to cargo sling beam 10 below the center of gravity of cargo sling beam 10, for example to reduce pivoting movements of cargo sling beam 10 around longitudinal axis 160.

In some embodiments, cargo sling beam 10 may have a recess with an opening from below. Figure 6A is a diagram of an illustrative apparatus for carrying cargo having cargo sling beam 10 with a circular shape at both ends 15 and recess 200 between the two ends 15 in accordance with some embodiments.

As shown, cargo hook attach point 50 of cargo hook 40 may join recess 200 of cargo sling beam 10, where attach point 50 is attached to cargo sling beam 10 using suspension device 75. Any appropriate suspension device 75 (e.g., cargo hook swivel bolt 70) may attach cargo hook attach point 50 to cargo sling beam 10. For example, cargo hook attach point 50 may be an eye, and cargo hook swivel bolt 70 may attach cargo hook attach point 50 at recess 200 to cargo sling beam 10. If desired, recess 200 of cargo sling beam 10 may enclose cargo hook attach point 50 (e.g., in a constriction region between cargo sling beam ends 15).

As shown in Figure 6A, the cargo hook compartment does not provide access through a cargo hook compartment door such as cargo hook compartment door 95 of Figure 3. Thus, cargo sling beam 10 may be mounted only from below bottom shell 100 (e.g., through an opening in the bottom shell). If desired, floor structure 90 may have a cargo hook compartment door such as cargo hook compartment door 95 of Figure 3 to provide access to the cargo hook compartment from above.

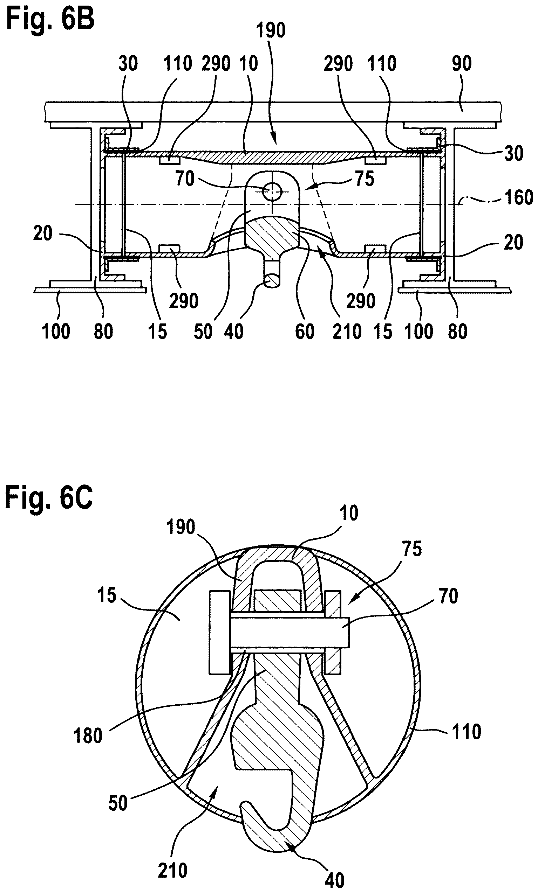

Figure 6B is a diagram of another illustrative apparatus for carrying cargo in which the cargo sling beam may be mounted only from below the bottom shell in accordance with some embodiments. The apparatus for carrying cargo may have a cargo sling beam 10 with a circular shape at both ends 15, a recess between the two ends 15, and an opening 210.

If desired, resistance strain gauges 290 may be installed on cargo sling beam 10 at one or more places. Resistance strain gauges 290 may measure the strain and/or deformation that a load applied to cargo hook 40 may cause. If desired, other strain sensors that are suitable for measuring the strain and/or deformation caused by a load applied to cargo hook 40 may be used instead of or in addition to resistance strain gauges 290.

In some embodiments, resistance strain gauges 290 may be installed in the interior of cargo sling beam 10. Thereby, resistance strain gauges 290 may be protected from environmental influences. Resistance strain gauges 290 may be electrically connected when mounting cargo sling beam 10 to brackets 20 and electrically disconnected when demounting cargo sling beam 10 from brackets 20.

Different arrangements of resistance strain gauges 290 are possible. For example, resistance strain gauges 290 on only one side of cargo sling beam 10 (e.g., only on the top or only on the bottom of cargo sling beam 10) may be coupled in a half Wheatstone bridge. As another example, resistance strain gauges 290 on both sides of cargo sling beam 10 (e.g., on the top and on the bottom of cargo sling beam 10) may be coupled in a full Wheatstone bridge. The full Wheatstone bridge with resistance strain gauges 290 on both sides of cargo sling beam 10 may better compensate temperature influences and measure more precisely within a wide temperature range, while the half Wheatstone bridge may be cheaper.

Cargo sling beam 10 may have constriction region 190 between ends 15. In other words, the diameter of cargo sling beam 10 may be smaller in at least one dimension in constriction region 190 than at ends 15. As shown, opening 210 may be in constriction region 190. Opening 210 may have a collar to reduce local stress under load, if desired.

As shown, suspension device 75 may receive attach point 50 of cargo hook 40 inside opening 210 of cargo sling beam 10. If desired, opening 210 of cargo sling beam 10 may enclose cargo hook attach point 50.

Figure 6C is a diagram of a cross-section perpendicular to a longitudinal axis of cargo sling beam 10 (e.g., perpendicular to longitudinal axis 160 of Figure 6B) through an illustrative apparatus for carrying cargo in accordance with some embodiments. The apparatus for carrying cargo may have a cargo sling beam 10 with a circular shape at both ends 15.

If desired, cargo sling beam 10 may have a recess at constriction region 190 between the two ends 15. Cargo sling beam 10 may receive cargo hook 40 at the recess through opening 210. As shown, opening 210 of cargo sling beam 10 may enclose cargo hook attach point 50. Suspension device 75 may receive attach point 50 of cargo hook 40 inside opening 210 of cargo sling beam 10.

As shown, suspension device 75 may include bolt 70 and bolt bearing 180. Bolt bearing 180 may enable a pivoting movement of cargo hook 40 at attach point 50 around an axis defined by bolt 70. The bearing may be metallic and connected to cargo sling beam 10. If desired, a glued clearance fit may be used.

Cargo sling beam 10 may have radial bearings 110 that enable a smooth movement of attachments (e.g., attachments 30 of Figure 6B) on cargo sling beam 10 and/or brackets (e.g., brackets 20 of Figure 6B) and a smooth pivoting movement of cargo sling beam 10 around longitudinal axis 160.

In some embodiments, the attachments (e.g., attachments 30 of Figure 6B) may include radial bearings 110 that enables a smooth movement of the attachments on cargo sling beam 10 and/or the brackets and a smooth pivoting movement of cargo sling beam 10 around longitudinal axis 160. If desired, both the attachments and cargo sling beam 10 may have radial bearing 110.

In some embodiments, the attachments may be moved completely over cargo sling beam 10 when mounting cargo sling beam 10 to brackets 20 or when demounting cargo sling beam 10 from the brackets. When cargo sling beam 10 is aligned with the brackets, the attachments may be slid in direction of the brackets to removably connect cargo sling beam 10 with the brackets. If desired, the attachments may be locked to prevent an accidental movement of the attachments from the brackets onto cargo sling beam 10, for example when carrying of a load with cargo hook 40.

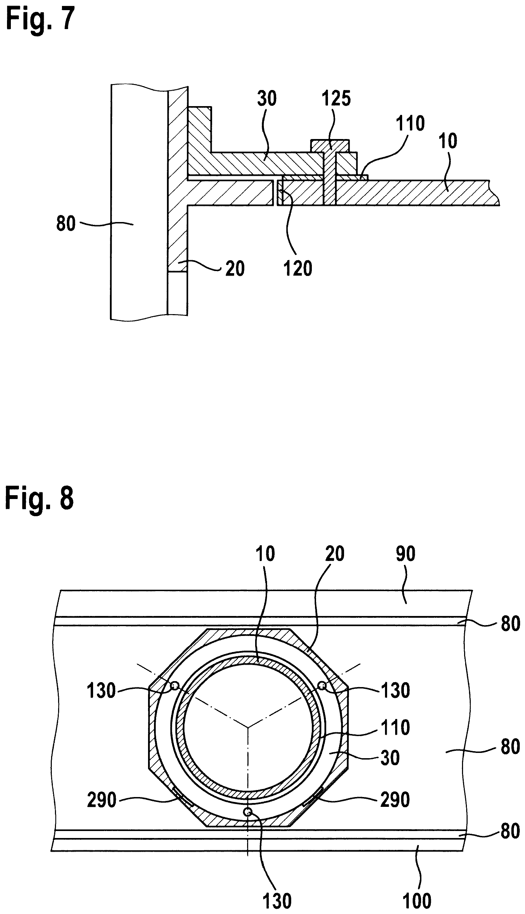

Figure 7 is a diagram of an illustrative locking device 125 that locks attachment 30 at cargo sling beam 10 in accordance with some embodiments. If desired, radial bearings 110 and/or axial bearings 120 may be attached (e.g., laminated or glued) to cargo sling beam 10 to enable a pivoting movement of cargo sling beam 10 around its longitudinal axis (i.e., longitudinal axis 160 of Figure 3). In some embodiments, axial bearings 120 and/or radial bearing may be attached to brackets 20 and/or attachments 30.

Locking device 125 may be any device that is appropriate for removably locking attachment 30 at cargo sling beam 10. For example, locking device 125 may be a fastener such as a bolt, a pin, or a screw, just to name a few. Locking device 125 may ensure that cargo sling beam 10 remains mounted to bracket 20 by preventing a movement of attachment 30.

In some embodiments, locking device 125 may lock cargo sling beam 10 with respect to bracket 20 in a predetermined position rotated around longitudinal axis 160. For example, when simultaneously and removably attaching attachment 30 to bracket 20.

Figure 8 is a diagram of an illustrative attachment 30 in form of an attachment ring that is removably connected with bracket 20 to hold attachment 30 and thereby cargo sling beam 10 in place in accordance with some embodiments. If desired, attachment 30 may include two or more bearing shells instead of an attachment ring.

As shown, resistance strain gauges 290 may be attached to attachment 30. Resistance strain gauges 290 may measure a deformation of attachment 30 when a load is attached to the cargo hook.

As shown, three fasteners 130 may removably connect attachment 30 with bracket 20, for example to ensure a form fit between bracket 20 and cargo sling beam 10. The three fasteners may be any type of fastener that may removably connect attachment 30 with bracket 20 such as a bolt with or without a nut, a pin, a clamp, a clip, or a screw, just to name a few. In one embodiment, all fasteners may be of the same type. In another embodiment, at least two of the fasteners may be of a different type.

The number of fasteners that removably connect attachment 30 with bracket 20 may be selected to be smaller than three or greater than three, if desired. The time required for mounting and demounting of attachment 30 and the manufacturing cost of the apparatus for carrying cargo may both increase with the number of fasteners, while the pivoting movement of cargo sling beam 10 around its longitudinal axis may become smoother with an increasing number of fasteners, which may reduce the maintenance cost of the apparatus for carrying cargo.

The position of fasteners 130 may be located at predetermined angles around the longitudinal axis of cargo sling beam 10 (e.g., around longitudinal axis 160 of Figure 3). For example, the position of fasteners 130 may have an equal angle between each other, i.e., two fasteners may be placed on opposite sides of attachment 30, three fasteners may be placed at a 120° angle between each other, four fasteners at a 90° angle between each other, etc.

As another example, the position of fasteners 130 may have unequal angles between at least two positions of fasteners 130. For example, two fasteners may be placed at a 160° angle (and a 200° angle) between each other, two of three fasteners may be placed on opposite sides of attachment 30, while the third of the three fasteners is placed at a 90° angle between the two other fasteners, etc.

The position of fasteners 130 on attachment 30 may be determined based on any criteria. For example, the position of fasteners 130 on attachment 30 may be based on whether the fastener may be reached for fastening during mounting and demounting of cargo sling beam 10.

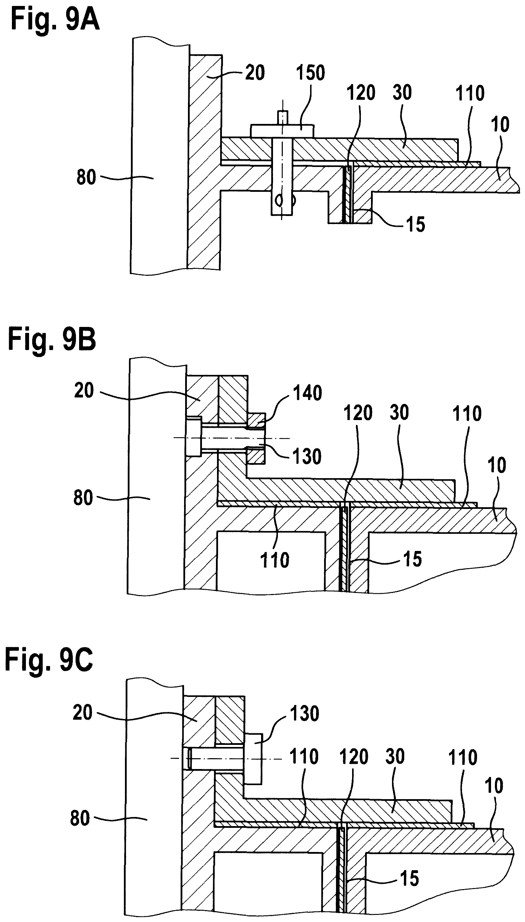

As shown, fasteners 130 may fasten attachment 30 with bracket 20 in longitudinal direction of cargo sling beam 10 (e.g., through a flange of attachment 30). Other ways of removably connecting attachment 30 with bracket 20 are possible. Figures 9A, 9B, and 9C show different examples for removably connecting attachment 30 with bracket 20.

Figure 9A is a diagram of a cross-section showing an illustrative attachment 30 without a flange that is attached to bracket 20 with locking pin 150 to hold cargo sling beam 10 in place in accordance with some embodiments. As shown, locking pin 150 may fasten attachment 30 with bracket 20 perpendicular to longitudinal direction of cargo sling beam 10.

Figure 9B is a diagram of a cross-section showing an illustrative attachment 30 with a flange that is attached to bracket 20 with nut 140 and bolt 130 to hold cargo sling beam 10 in place in accordance with some embodiments. As shown, bolt 130 may be integrated in bracket 20. The flange of attachment 30 may have a hole that may be aligned with bolt 130. Nut 140 may be screwed onto bolt 130 to ensure a form fit between attachment 30 and bracket 20.

Figure 9C is a diagram of a cross-section showing an illustrative attachment 30 with a flange that is attached to bracket 20 with bolt 130 to hold cargo sling beam 10 in place in accordance with some embodiments. For example, bracket 20 may have a threaded hole that is aligned with a hole in attachment 30 and through which bolt 130 attaches attachment 30 to bracket 20. If desired, bolt 130 may be replaced by a screw.

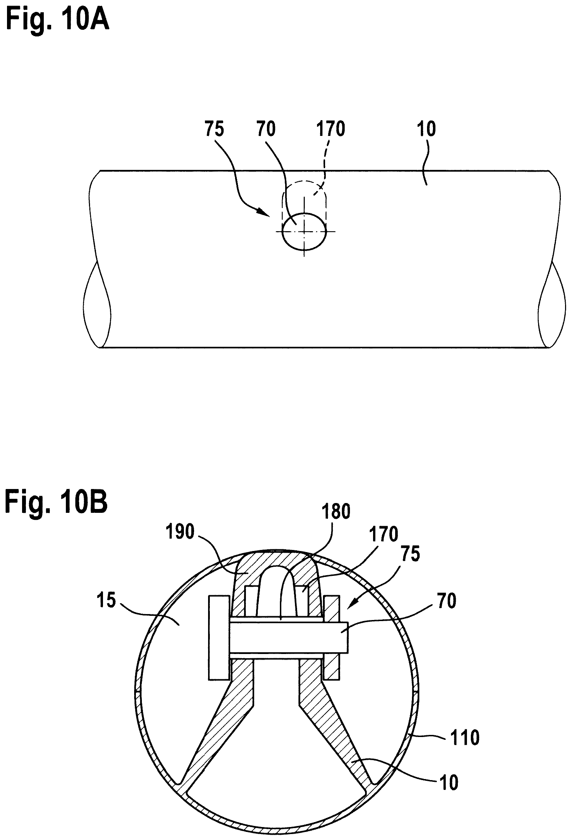

Figure 10A is a diagram of an illustrative cargo sling beam 10 with suspension device 75 having a bolt bearing between bolt 70 and the attach point of a cargo hook, whereby the bolt bearing has a section thinning 170 on at least one side to ensure a turnout of the cargo hook during a crash of the aircraft in accordance with some embodiments.

Figure 10B is a diagram of a cross-section showing an illustrative cargo sling beam 10 with bolt bearing 180 between bolt 70 and an attach point of a cargo hook, whereby bolt bearing 180 has a section thinning 170 on at least one side to ensure a turnout of the cargo hook during a crash of the aircraft in accordance with some embodiments. For example, bolt bearing 180 may have section thinning 170 towards its top side to ensure a turnout of suspension device 75 of the cargo hook's attach point during a crash. As an example, bolt 70 may break through the bolt bearing's upper side.

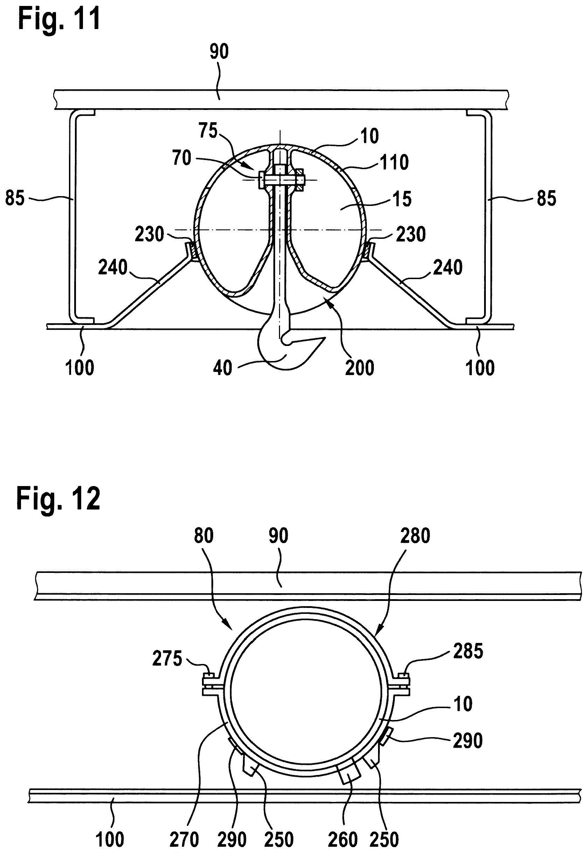

Figure 11 is a diagram of a cross-section showing an illustrative cargo sling beam 10 that is attached to longitudinal frame components in a compartment that is delimited by the longitudinal frame components and transversal frame components 85. If desired, bottom shell 100 may be extended and form bottom shell cone 240 that closes the cargo hook compartment from below with sealing 230 between bottom shell cone 240 and cargo sling beam 10.

As shown, cargo sling beam 100 may receive cargo hook 40 through recess 200. Cargo hook swivel bolt 70 of suspension device 75 may attach the cargo hook's attach point to cargo sling beam 10. If desired, bolt 70 may be surrounded by a bolt bearing such as bolt bearing 180 of Figures 10A and 10B. In some embodiments, the bolt bearing may have a section thinning such as section thinning 170 of Figures 10A and 10B.

In some scenarios, the outer contour of cargo sling beam 10 may be shaped cylindrical on the whole beam length. Thereby, sealing 230 may seals the cargo hook compartment together with bottom shell cone 240.

Sealing 230 may be any sealing that allows closing the cargo hook compartment from below while enabling a pivotal movement of cargo sling beam 10 around its longitudinal axis such as longitudinal axis 160 of Figure 3. As an example, sealing 230 may include brush seals.

In some embodiments, the cargo hook compartment may have a cargo hook compartment door such as cargo hook compartment door 95 of Figure 3 that provides access to the cargo hook compartment through floor structure 90 of the aircraft. Thus, cargo sling beam 10 may be mounted through the cargo hook compartment door, for example during operation of the aircraft, if desired.

Figure 12 is a diagram of a cross-section showing an illustrative cargo sling beam 10 that is fixed to a bracket with an attachment that includes two bearing shells in accordance with some embodiments.

If desired, the apparatus for carrying cargo may include a rotation limitation device that limits the pivoting movement of cargo sling beam 10 around its longitudinal axis to a predetermined angle. In some embodiments, cargo sling beam 10 may include a part of the rotation limitation device 260. A fastener may fasten part of rotation limitation device 260 onto cargo sling beam 10. The fastener may be any fastener that allows to fasten part of rotation limitation device 260 onto cargo sling beam 10 either permanently or removably. For example, the fastener may be a bolt, a pin, a clamp, a clip, a nail, a rivet, or a screw, just to name a few.

The rotation limitation device may in addition to part 260 include one or two other parts 250 that does not rotate with cargo sling beam 10 around its longitudinal axis. For example, parts 250 of the rotation limitation device may be attached to the bracket and/or to the attachment and/or to the frame component to which the bracket is attached.

Together, parts 250 and part 260 of the rotation limitation device may limit rotation of cargo sling beam 10 around the longitudinal axis in two directions. If desired, the rotation limitation device may only limit rotation of cargo sling beam 10 around the longitudinal axis in one direction.

As shown, one part of the rotation limitation device (i.e., part 260) is attached to cargo sling beam 10, while two parts of the rotation limitation device (i.e., parts 250) are attached to the bracket and/or to the attachment and/or to the frame component to which the bracket is attached. In some embodiments, at least one part of the two parts 250 of the rotation limitation device that are attached to the bracket and/or to the attachment and/or to the frame component may be arranged near the stiff corners of the frame component (e.g., longeron 80) and bottom shell 100 or near the stiff corners of the frame component (e.g., longeron 80) and floor structure 90.

If desired, two parts 260 of the rotation limitation device may be attached to cargo sling beam 10, while one part 250 of the rotation limitation device is attached to the bracket and/or to the attachment and/or to the frame component to which the bracket is attached. In some embodiments, the one part 250 of the rotation limitation device that is attached to the bracket and/or to the attachment and/or to the frame component may be arranged near the stiff corners of the frame component (e.g., longeron 80) and bottom shell 100 or near the stiff corners of the frame component (e.g., longeron 80) and floor structure 90.

The rotation limitation device may be installed at one end of cargo sling beam 10. If desired, the rotation limitation device may be installed on both ends of cargo sling beam 10.

As shown, the rotation limitation device is installed on the outside of cargo sling beam 10. Thus, a light weight design of the rotation limitation device may be possible in comparison with an installation of the rotation limitation in the center of cargo sling beam 10.

If desired, cargo sling beam 10 may be rotated about its longitudinal axis by a predetermined angle and stopped in this position, for example using a locking device such as locking device 125 of Figure 7. As a result, cargo hook 40 may not protrude from the aircraft when not in use. Thus, the aerodynamic may not be influenced by cargo hook 40. As another result, cargo hook 40 may not have a negative influence during a crash of the aircraft.

As shown, resistance strain gauges 290 may be attached to the attachment and/or to cargo sling beam 10. Resistance strain gauges 290 may measure a deformation of the attachment and/or of cargo sling beam 10 when a load is attached to the cargo hook.

In some embodiments, the attachment may include a lower bearing shell 270 and an upper bearing shell 280 that together enclose cargo sling beam 10 at the end. Two fasteners 275 and 285 may removably connect the lower bearing shell 270 with the upper bearing shell 280 at the end of cargo sling beam 10.

If desired, at least one of fasteners 275 or 285 may break during a crash of the aircraft, thereby freeing cargo sling beam 10 and enabling the floor structure to work as crash-zone.

Fasteners 275 and 285 may be any type of fastener that may removably connect the lower and upper bearing shells 270 and 280 such as a bolt with or without a nut, a pin, or a screw, just to name a few. The two fasteners 275 and 285 may be the same type of fastener. If desired, the two fasteners 275 and 285 may be different types of fastener. In some embodiments, one of fasteners 275 or 285 may be replaced by a hinge.

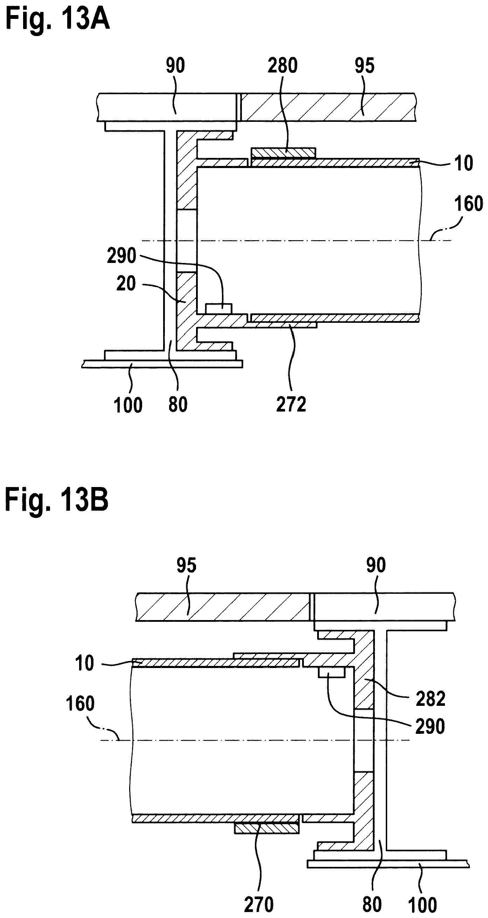

If desired, one of the bearing shells may be integrated with the bracket. Figure 13A is a diagram of an illustrative cargo sling beam 10 that is fixed to a bracket 20 in which the lower bearing shell is integrated into the bracket 272 in accordance with some embodiments. In other words, the lower bearing shell may be part of the bracket and stays in place when cargo sling beam 10 is demounted.

Upper bearing shell 280 may be attached to bracket with integrated lower bearing shell 272 to enclose cargo sling beam 10 at the end. Two fasteners such as fasteners 275 and 285 of Figure 12 may removably connect the upper bearing shell with the bracket with integrated lower bearing shell 272.

In some embodiments, resistance strain gauge 290 is attached to the bracket with integrated lower bearing shell 272. Since the bracket with integrated lower bearing shell 272 remains in place when cargo sling beam 10 is demounted, resistance strain gauge 290 may remain electrically connected when cargo sling beam 10 is demounted.

In some scenarios, the cargo hook compartment may not be large enough to allow for cargo sling beam 10 to be mounted from below through a hole in bottom shell 100. In these scenarios, the mounting of cargo sling beam 10 may require a mounting of cargo sling beam 10 through the cargo hook compartment door 95 from inside the helicopter.

Figure 13B is a diagram of an illustrative cargo sling beam 10 that is fixed to a bracket 20 in which the upper bearing shell is integrated into the bracket 282 in accordance with some embodiments. In other words, the upper bearing shell may be part of the bracket and stays in place when cargo sling beam 10 is demounted.

Lower bearing shell 270 may be attached to bracket with integrated upper bearing shell 282 to enclose cargo sling beam 10 at the end. Two fasteners such as fasteners 275 and 285 of Figure 12 may removably connect the lower bearing shell with the bracket with integrated upper bearing shell 282.

In some embodiments, resistance strain gauge 290 is attached to the bracket with integrated upper bearing shell 282. Since the bracket with integrated upper bearing shell 282 remains in place when cargo sling beam 10 is demounted, resistance strain gauge 290 may remain electrically connected when cargo sling beam 10 is demounted.

In some scenarios, the cargo hook compartment may not be large enough to allow for cargo sling beam 10 to be mounted through cargo hook compartment door 95. In these scenarios, the mounting of cargo sling beam 10 may require a mounting of cargo sling beam 10 from below through a hole in bottom shell 100.

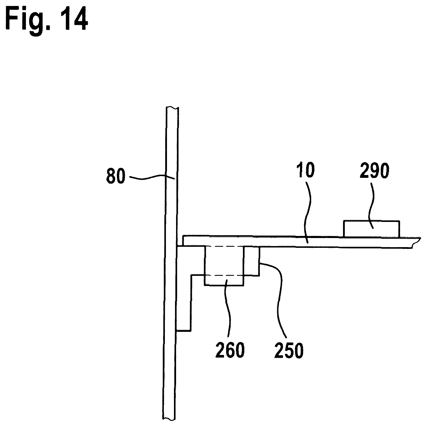

Figure 14 is a diagram of an illustrative rotation limitation device in accordance with some embodiments. As shown, the rotation limitation device may include a part 250 that is attached to longeron 80 and a part 260 that is attached to cargo sling beam 10. Rotation of cargo sling beam 10 around its longitudinal axis may be stopped when the part 260 that is attached to cargo sling beam 10 reaches the part 250 that is attached to longeron 80.

It should be noted that the above described embodiments are merely described to illustrate possible realizations of the present invention, but not in order to restrict the present invention thereto. Instead, multiple modifications and variations of the invention are possible and should, therefore, also be considered as being part of the invention.

By way of example, cargo sling beam 10 is shown in Figures 3, 4, 5A, 5B, and 5C to receive cargo hook 40 at equal distance from both ends 15. If desired, cargo sling beam 10 may receive cargo hook 40 at a location that is closer to one of the two ends 15 of cargo sling beam 10.

Furthermore, cargo sling beam 10 is shown in Figures 7, 13A, and 13B to have a tubular shape at ends 15. In other words, cargo sling beam 10 is shown to be open at ends 15. If desired, cargo sling beam 10 may have flanges at ends 15 or a disc that completely closes cargo sling beam 10 at ends 15. The shape of ends 15 of cargo sling beam 10 may be matched by brackets 20.

If desired, axial bearings such as axial bearings 120 of Figures 7, 9A, 9B, and 9C may be attached to the flange or to the disc at ends 15 and/or to the brackets to enable a smooth pivoting movement of cargo sling beam 10 around longitudinal axis 160.

As another example, the cargo hook compartment of Figures 5B and 5C is shown without a cargo hook compartment door. If desired, the cargo hook compartment of Figures 5B and 5C may have a cargo hook compartment door such as cargo hook compartment door 95 shown in Figures 3, 4, and 5A so that cargo sling beam 10 may be mounted either from below bottom shell 100 (e.g., through an opening in the bottom shell) or from above floor structure 90 (e.g., through cargo hook compartment door 95).

### Reference List

- 1: aircraft
- 1a: multi-blade main rotor
- 1b, 1c: rotor blades
- 1d: rotor head
- 1e: main rotor axis
- 1f: skid-type landing gear
- 2: fuselage
- 2a: fuselage underside
- 3a: cockpit
- 3b: cargo compartment
- 3c: floor structure
- 3d: tail boom
- 4: subfloor region
- 5: subfloor arrangement
- 7: cargo hook compartment
- 10: cargo sling beam
- 15: cargo sling beam end
- 20: bracket
- 30: attachment
- 40: cargo hook
- 50: cargo hook attach point
- 60: cargo hook mechanics with load cell
- 70: cargo hook swivel bolt
- 75: suspension device
- 80: longitudinal frame components/longerons
- 85: transversal frame components
- 90: floor structure
- 95: cargo hook compartment door
- 100: bottom shell
- 110: radial bearings
- 120: axial bearing
- 125: locking device
- 130: fastener/bolt
- 140: fastener/nut
- 150: fastener/locking pin
- 160: longitudinal axis
- 170: section thinning
- 180: bolt bearing
- 190: constriction region
- 200: recess
- 210: opening
- 220: frame
- 230: sealing
- 240: bottom shell cone
- 250: part of rotation limitation device on frame component
- 260: part of rotation limitation device on cargo sling beam
- 270: lower bearing shell
- 275: fastener
- 280: upper bearing shell
- 285: fastener
- 290: resistance strain gauge

## Claims

1. An apparatus for carrying cargo, the apparatus being mountable in a subfloor region (4) of an aircraft (1), comprising:
a first bracket (20) is adapted to be rigidly attached to a first structural component (80, 85) of the aircraft; a second bracket (20) is adapted to be rigidly attached to a second structural component (80, 85) of the aircraft (1); a cargo hook (40); and a cargo sling beam (10) that has a longitudinal axis (160) in a longitudinal direction and first and second ends (15) in the longitudinal direction,
wherein the cargo sling beam (10) has a tubular shape at the first and second ends (15) and a constriction region (190) at a predetermined location between the first and second ends (15) that is narrower than the first and second ends, and wherein the cargo sling beam (10) comprises: a suspension device (75) in the constriction region (190) that receives the cargo hook (40), and first and second attachments (30) connect the first and second ends (15) removably and at least partially pivotably around the longitudinal axis (160) with the first and second brackets (20), respectively; wherein the suspension device (75) further comprises a bolt (70) that connects an attach point (50) of the cargo hook (40) with the cargo sling beam (10); and a bolt bearing (180) between the bolt (70) and the attach point (50), **characterized in that** the bolt bearing (180) has a section thinning (170) on at least one side, the bolt bearing (180) being adapted to ensure a turnout of the cargo hook (40) during a crash of the aircraft (1).

2. The apparatus of claim 1, wherein the cargo sling beam (10) is at least partially made from a fiber reinforced composite material.

3. The apparatus of claim 1 or 2, wherein the cargo sling beam (10) further comprises:
a rotation limitation device (250, 260) that limits rotation of the cargo sling beam (10) around the longitudinal axis (160) to a predetermined angle.

4. The apparatus of any of the preceding claims, wherein the cargo sling beam (10) further comprises:
a locking device (125) that locks the cargo sling beam (10) in a predetermined position rotated around the longitudinal axis (160).

5. The apparatus of any of the preceding claims, wherein the cargo sling beam (10) further comprises:
at least one resistance strain gauge (290) that measures a deformation of the cargo sling beam (10) when a load is attached to the cargo hook (40).

6. The apparatus of claim 1, wherein the cargo hook (40) further comprises:
the attach point (50) that is fork-shaped and encloses the cargo sling beam (10) in the constriction region (190).

7. The apparatus of claim 1, wherein the cargo hook (40) further comprises:
the attach point (50) that is ring-shaped, wherein the cargo sling beam (10) has an opening (210) in the constriction region (190) that encloses the attach point (50).

8. The apparatus of claim 1, wherein the first attachment further comprises:
a bearing sleeve (30) that is movable on the cargo sling beam (10) in longitudinal direction at the first end (15) for connecting the cargo sling beam (10) with the first bracket (20); and
a radial bearing (110) between the bearing sleeve (30) and the first end (15) of the cargo sling beam (10).

9. The apparatus of claim 8, further comprising:
at least three fasteners (130) for removably connecting the bearing sleeve (30) with the first bracket (20).

10. The apparatus of claim 1, further comprising:
first and second bearing shells (270, 280) that together enclose the cargo sling beam (10) at the first end (15); and
first and second fasteners (275, 285) for removably connecting the first bearing shell (270) with the second bearing shell (280) at the first end (15) of the cargo sling beam (10), and wherein the first and second fasteners (275, 285) break during a crash of the aircraft (1).

11. The apparatus of claim 10, wherein the first bracket (20) comprises one of the first or second bearing shells (270, 280) to form a bracket with integrated bearing shell (272, 282).

12. The apparatus of any of claims 1 to 11, further comprising:
a resistance strain gauge (290) that measures a deformation of the first bracket (20) when a load is attached to the cargo hook (40).

13. An aircraft (1) comprising at least one apparatus as per one of claims 1-12, **characterized in that** the apparatus is mounted in a subfloor region (4) of the aircraft (1), the first bracket (20) being rigidly attached to the first structural component (80, 85) of the aircraft (1) and the second bracket (20) being rigidly attached to the second structural component (80, 85) of the aircraft (1).

14. The aircraft (1) of claim 13, wherein the first and second structural components (80, 85) are connected to at least one of a floor structure (90) of the aircraft (1) or a bottom shell (100) of the aircraft (1).

15. The aircraft (1) of at least one of claims 13-14, wherein the first and second structural components (80, 85) are selected from the group consisting of longerons, stringers, stiffeners, formers, ribs, spars, and frames.

## Patentansprüche

1. Vorrichtung zum Transportieren von Fracht, wobei die Vorrichtung in einem Unterbodenbereich (4) eines Luftfahrzeugs (1) montierbar ist, umfassend:
eine erste Halterung (20), die geeignet ist, starr an einer ersten Strukturkomponente (80, 85) des Luftfahrzeugs befestigt zu werden; eine zweite Halterung (20), die geeignet ist, starr an einer zweiten Strukturkomponente (80, 85) des Luftfahrzeugs (1) befestigt zu werden; einen Frachthaken (40); und einen Frachtschlingenträger (10), der eine Längsachse (160) in einer Längsrichtung und ein erstes und ein zweites Ende (15) in der Längsrichtung aufweist,
wobei der Frachtschlingenträger (10) an dem ersten und dem zweiten Ende (15) eine rohrförmige Form und an einer vorgegebenen Stelle zwischen dem ersten und dem zweiten Ende (15) einen Einschnürungsbereich (190) aufweist, der schmaler ist als das erste und
das zweite Ende, und wobei der Frachtschlingenträger (10) umfasst: eine Aufhängungsvorrichtung (75) in dem Einschnürungsbereich (190), die den Frachthaken (40) aufnimmt, und eine erste und eine zweite Befestigung (30), die das erste und das zweite Ende (15) lösbar und zumindest teilweise um die Längsachse (160) schwenkbar mit der ersten bzw. der zweiten Halterung (20) verbinden;
wobei die Aufhängungsvorrichtung (75) ferner einen Bolzen (70), der einen Befestigungspunkt (50) des Frachthakens (40) mit dem Frachtschlingenträger (10) verbindet; und ein Bolzenlager (180) zwischen dem Bolzen (70) und dem Befestigungspunkt (50) umfasst,
**dadurch gekennzeichnet, dass** das Bolzenlager (180) auf mindestens einer Seite eine Querschnittsverdünnung (170) aufweist, und das Bolzenlager (180) angepasst ist, um ein Ausweichen des Frachthakens (40) während eines Absturzes des Luftfahrzeugs (1) sicherzustellen.

2. Vorrichtung nach Anspruch 1, bei der der Frachtschlingenträger (10) zumindest teilweise aus einem faserverstärkten Verbundwerkstoff hergestellt ist.

3. Vorrichtung nach Anspruch 1 oder 2, bei der der Frachtschlingenträger (10) ferner umfasst:
eine Drehbegrenzungsvorrichtung (250, 260), die die Drehung des Frachtschlingenträgers (10) um die Längsachse (160) auf einen vorgegebenen Winkel begrenzt.

4. Vorrichtung nach einem der vorhergehenden Ansprüche, bei der der Frachtschlingenträger (10) ferner umfasst:
eine Verriegelungsvorrichtung (125), die den Frachtschlingenträger (10) in einer vorgegebenen, um die Längsachse (160) gedrehten Position verriegelt.

5. Vorrichtung nach einem der vorhergehenden Ansprüche, bei der der Frachtschlingenträger (10) ferner umfasst:
mindestens einen Widerstands-Dehnungsmessstreifen (290), der eine Verformung des Frachtschlingenträgers (10) misst, wenn eine Last an dem Frachthaken (40) befestigt ist.

6. Vorrichtung nach Anspruch 1, bei der der Frachthaken (40) ferner umfasst:
den Befestigungspunkt (50), der gabelförmig ist und den Frachtschlingenträger (10) im Einschnürungsbereich (190) umschließt.

7. Vorrichtung nach Anspruch 1, bei der der Frachthaken (40) ferner umfasst:
den Befestigungspunkt (50), der ringförmig ist, wobei der Frachtschlingenträger (10) im Einschnürungsbereich (190) eine Öffnung (210) aufweist, die den Befestigungspunkt (50) umschließt.

8. Vorrichtung nach Anspruch 1, wobei die erste Befestigung ferner umfasst:
eine Lagerhülse (30), die am ersten Ende (15) auf dem Frachtschlingenträger (10) in Längsrichtung beweglich ist, um den Frachtschlingenträger (10) mit der ersten Halterung (20) zu verbinden; und
ein Radiallager (110) zwischen der Lagerhülse (30) und dem ersten Ende (15) des Frachtschlingenträgers (10).

9. Vorrichtung nach Anspruch 8, ferner umfassend:
mindestens drei Befestigungsmittel (130) zum lösbaren Verbinden der Lagerhülse (30) mit der ersten Halterung (20).

10. Vorrichtung nach Anspruch 1, ferner umfassend:
erste und zweite Lagerschalen (270, 280), die zusammen den Frachtschlingenträger (10) am ersten Ende (15) umschließen; und
erste und zweite Befestigungselemente (275, 285) zum lösbaren Verbinden der ersten Lagerschale (270) mit der zweiten Lagerschale (280) am ersten Ende (15) des Frachtschlingenträgers (10), wobei die ersten und zweiten Befestigungselemente (275, 285) während eines Absturzes des Luftfahrzeugs (1) brechen.

11. Vorrichtung nach Anspruch 10, bei der die erste Halterung (20) eine unter der ersten oder der zweiten Lagerschale (270, 280) umfasst, um eine Halterung mit integrierter Lagerschale (272, 282) zu bilden.

12. Vorrichtung nach einem der Ansprüche 1 bis 11, ferner umfassend:
einen Widerstands-Dehnungsmessstreifen (290), der eine Verformung der ersten Halterung (20) misst, wenn eine Last am Frachthaken (40) befestigt ist.

13. Luftfahrzeug (1) mit mindestens einer Vorrichtung nach einem der Ansprüche 1 bis 12, **dadurch gekennzeichnet, dass** die Vorrichtung in einem Unterbodenbereich (4) des Luftfahrzeugs (1) montiert ist, wobei die erste Halterung (20) starr an der ersten Strukturkomponente (80, 85) des Luftfahrzeugs (1) befestigt ist und die zweite Halterung (20) starr an der zweiten Strukturkomponente (80, 85) des Luftfahrzeugs (1) befestigt ist.

14. Luftfahrzeug (1) nach Anspruch 13, bei dem die erste und die zweite Strukturkomponente (80, 85) mit mindestens einer Bodenstruktur (90) des Luftfahrzeugs (1) oder einer Bodenschale (100) des Luftfahrzeugs (1) verbunden sind.

15. Luftfahrzeug (1) nach mindestens einem der Ansprüche 13-14, bei dem die erste und die zweite Strukturkomponente (80, 85) aus der Gruppe ausgewählt sind, die aus Längsträgern, Stringern, Versteifungen, Spanten, Rippen, Holmen und Rahmen besteht.

## Revendications

1. Agencement pour le transport de marchandises, l'agencement pouvant être monté dans une zone sous plancher (4) d'un aéronef (1), comprenant :
un premier support (20) configuré pour être fixé de façon rigide à un premier composant structurel (80, 85) de l'aéronef ; un second support (20) configuré pour être fixé de façon rigide à un second composant structurel (80, 85) de l'aéronef (1) ; un crochet de charge (40) ; et une poutre à profil de charge (10) qui a un axe longitudinal (160) suivant une direction longitudinale et des première et seconde extrémités (15) suivant la direction longitudinale,
dans lequel la poutre à profil de charge (10) présente une forme tubulaire à l'emplacement des première et seconde extrémités (15) et à un emplacement prédéterminé entre les première et seconde extrémités (15) une zone de resserrement (190) qui est plus étroite que les première et seconde extrémités, et dans lequel la poutre à profil de charge (10) comprend : un dispositif de suspension (75) dans la zone de resserrement (190) qui reçoit un crochet de charge (40), et des première et seconde fixations (30) qui relient les première et seconde extrémités (15) de façon amovible et au moins partiellement à pivotement autour de l'axe longitudinal (160) aux premier et second supports (20), respectivement ;
dans lequel le dispositif de suspension (75) comprend en outre un doigt de montage (70) qui relie un point de fixation (50) du crochet de charge (40) à la poutre à profil de charge (10) ; et un palier de doigt de montage (180) entre le doigt de montage (70) et le point de fixation (50),
**caractérisé en ce que** le palier de doigt de montage (180) présente une section amincie (170) sur au moins un côté, le palier de doigt de montage (180) étant configuré pour permettre un pivotement du crochet de charge (40) lors d'un crash de l'aéronef (1).

2. Agencement selon la revendication 1, dans lequel la poutre à profil de charge (10) est au moins partiellement formée d'un matériau composite renforcé de fibres.

3. Agencement selon les revendications 1 ou 2, dans lequel la poutre à profil de charge (10) comprend en outre :
un dispositif de limitation de rotation (250, 260) qui limite la rotation de la poutre à profil de charge (10) autour de l'axe longitudinal (160) à un angle prédéterminé.

4. Agencement selon l'une quelconque des revendications précédentes, dans lequel la poutre à profil de charge (10) comprend en outre :
un dispositif de verrouillage (125) qui verrouille la poutre à profil de charge (10) dans une position prédéterminée de pivotement autour de l'axe longitudinal (160).

5. Agencement selon l'une quelconque des revendications précédentes, dans lequel la poutre à profil de charge (10) comprend en outre :
au moins une jauge de déformation à résistance (290) qui mesure une déformation de la poutre à profil de charge (10) lorsqu'une charge est accrochée au crochet de charge (40).

6. Agencement selon la revendication 1, dans lequel le crochet de charge (40) comprend en outre :
le point de fixation (50) qui est en forme de fourche et ceint la poutre à profil de charge (10) dans la zone de resserrement (190).

7. Agencement selon la revendication 1, dans lequel le crochet de charge (40) comprend en outre :
le point de fixation (50) qui est en forme d'anneau, dans lequel la poutre à profil de charge (10) présente une ouverture (210) dans la zone de resserrement (190) qui ceint le point de fixation (50).

8. Agencement selon la revendication 1, dans lequel la première fixation comprend en outre :
un manchon de palier (30) qui est déplaçable sur la poutre à profil de charge (10) suivant la direction longitudinale à l'emplacement de la première extrémité (15) pour relier la poutre à profil de charge (10) au premier support (20) ; et
un palier radial (110) entre le manchon de palier (30) et la première extrémité (15) de la poutre à profil de charge (10).

9. Agencement selon la revendication 8, comprenant en outre :
au moins trois attaches (130) pour relier de façon amovible le manchon de palier (30) au premier support (20).

10. Agencement selon la revendication 1, comprenant en outre :
des première et seconde coques de palier (270, 280) qui ensemble enveloppent la poutre à profil de charge (10) à l'emplacement de la première extrémité (15) ; et
des première et seconde attaches (275, 285) pour relier de façon amovible la première coque de palier (270) à la seconde coque de palier (280) à l'emplacement de la première extrémité (15) de la poutre à profil de charge (10), et pour que les première et seconde attaches (275, 285) se rompent lors d'un crash de l'aéronef (1).

11. Agencement selon la revendication 10, dans lequel le premier support (20) comprend une desdites première ou seconde coques de palier (270, 280) pour former un support avec la coque de palier intégrée (272, 282).

12. Agencement selon l'une quelconque des revendications 1 à 11, comprenant en outre :
une jauge de résistance à la déformation (290) qui mesure une déformation du premier support (20) lorsqu'une charge est accrochée au crochet de charge (40).

13. Aéronef (1) comprenant au moins un agencement selon l'une des revendications 1 à 12, **caractérisé en ce que** l'agencement est monté dans une zone sous plancher (4) de l'aéronef (1), le premier support (20) étant fixé de façon rigide au premier composant structurel (80, 85) de l'aéronef (1) et le second support (20) étant fixé de façon rigide au second composant structurel (80, 85) de l'aéronef (1).

14. Aéronef (1) selon la revendication 13, dans lequel lesdits premier et second composants structurels (80, 85) sont reliés à au moins une structure de plancher (90) de l'aéronef (1) ou à une coque inférieure (100) de l'aéronef (1).

15. Aéronef (1) selon au moins une des revendications 13-14, dans lequel les premier et second composants structurels (80, 85) sont choisis parmi le groupe comprenant les longerons, lisses, raidisseurs, profilés, nervures, poutres structurelles, et cadres.
